(19) Europäisches Patentamt

European Patent Office

Office européen des brevets

(11) **EP 0 951 433 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **98905291.5**

(22) Anmeldetag: **13.01.1998**

(51) Int Cl.$^7$: **B65G 13/075**

(86) Internationale Anmeldenummer:
**PCT/EP98/00161**

(87) Internationale Veröffentlichungsnummer:
**WO 98/030475 (16.07.1998 Gazette 1998/28)**

(54) **LAUFROLLE MIT UMFANGSBREMSE**

SWIVELLING ROLLER WITH A PERIPHERAL BRAKE

GALET DE ROULEMENT A FREIN PERIPHERIQUE

(84) Benannte Vertragsstaaten:
**BE DE FR GB IT NL SE**
Benannte Erstreckungsstaaten:
**SI**

(30) Priorität: **13.01.1997 DE 29700466 U**
**18.12.1997 DE 29722306 U**

(43) Veröffentlichungstag der Anmeldung:
**27.10.1999 Patentblatt 1999/43**

(73) Patentinhaber: **Haussels, Berthold**
**42929 Wermelskirchen-Tente (DE)**

(72) Erfinder: **Haussels, Berthold**
**42929 Wermelskirchen-Tente (DE)**

(74) Vertreter: **Füssel, Michael et al**
**Dr. Sturies - Eichler - Füssel**
**Patentanwälte**
**Lönsstrasse 55**
**42289 Wuppertal (DE)**

(56) Entgegenhaltungen:
**EP-A- 0 855 868        US-A- 1 900 149**
**US-A- 1 900 150**

**Beschreibung**

Die Erfindung betrifft eine Laufrolle mit Umfangsbremse.

Eine derartige Laufrolle mit Umfangsbremse ist bekannt aus der EP-A-855868.

Bei dieser Laufrolle mit Umfangsbremse stellt sich der Bremseffekt zwischen Bremsfläche und Bremsgegenfläche aufgrund der beiderseitigen Verzahnungen zwischen Bremsfläche und Bremsgegenfläche ein.

Problematisch hieran ist, daß die Verzahnungen nur dann ineinander greifen können, wenn die Zahnspitzen des einen Bremspartners genau über den Zahntälern des anderen Bremspartners angeordnet sind. Zur Erzielung der Bremswirkung muß daher die Laufrolle entsprechend positioniert werden.

Eine weitere derartige Laufrolle ist bekannt aus US-PS 1,900,150. Dort ist die Bremsfläche von einem Ringsegment gebildet, dessen Einhüllende sich entlang der Laufrolle erstreckt. Die Bremswirkung nimmt mit zunehmendem Verschleiß der Laufrolle ab.

Bei den bekannten Umfangsbremsen werden Bremsflächen an die Laufflächen von Laufrollen angepreßt. Die Bremsfläche wird dazu beispielsweise von einem vertikal geführten Bolzen beaufschlagt, welcher über einen Exzenter angetrieben wird. Der Exzenter weist ein Mehrkantloch auf und wird von einer mehrkantigen Stellwelle von der Brems- in die Freistellung und umgekehrt verdreht. Die Drehbewegung der Stellwelle wird somit in eine Linearbewegung des Bolzens, welcher die Bremsfläche beaufschlagt, umgewandelt. Eine solche Bremskonstruktion benötigt lediglich einen vergleichsweise geringen Platz. Sie kann beispielsweise bei Vorhandensein eines Schwenklagertopfes bei schwenkbaren Laufrollen in den Schwenklagertopf integriert werden. Aufgrund der konstruktiven Vorzüge im Hinblick auf den Platzbedarf ist eine solche Umfangsbremse besonders für Laufrollen geeignet. Backenbremsen, welche praktisch in axialer Richtung gegen die Stirnflächen der Laufrolle gepreßt werden, bedingen einen erheblich höheren Platzbedarf und Konstruktionsaufwand. Wegen des vergleichsweise geringen Durchmessers solcher Laufrollen ist die Anbringung von Backenbremsen konstruktiv schwierig. Die Anbringung der Bremsbacken wird vor allem durch die beiderseitigen Rollenaufhängungen behindert.

Für Laufrollen werden daher üblicherweise Umfangsbremsen verwendet. Bei normalem, vor allem industriellem Gebrauch unterliegen die Laufflächen von Laufrollen einer vergleichsweise hohen Beanspruchung. Dies führt dazu, daß sich die Laufflächen abnutzen.

Es ist daher Aufgabe der vorliegenden Erfindung, eine Laufrolle mit Umfangsbremse der eingangs genannten Art so auszubilden, daß trotz Anpressens mit Komponente quer zur Drehachse die Bremswirkung völlig unabhängig von Radstellung und vom Abnutzungsgrad, insbesondere von Material und Durchmesser der Lauffläche wird.

Diese Aufgabe wird gelöst durch die Merkmale des Hauptanspruchs.

Die Erfindung hat erkannt, daß die Abnutzung mit einer Verkleinerung des Durchmessers der Laufrolle einhergeht. Jedoch wird gerade die Lauffläche von der Bremsfläche der Umfangsbremse beaufschlagt. Dies führt dazu, daß bei einem vorgegebenen Verstellweg der Bremsfläche oder bei einer Federbremse die Bremswirkung mit der Zeit abnimmt. Eine solche Umfangsbremse muß daher häufiger nachgestellt werden. Dies bedingt einen erhöhten Arbeitsaufwand. Wird eine solche Umfangsbremse nicht nachgestellt, bedeutet das ein wegen der Abnahme der Bremswirkung erhebliches Sicherheitsrisiko. Die Bremsen können dann eventuell die vorgegebene Nutzlast nicht mehr festsetzen, vor allem an Schrägen. Bei einer herkömmlichen Umfangsbremse hat das Material der Lauffläche zudem eine Doppelfunktion zu erfüllen. Es muß sowohl gute Rolleigenschaften aufweisen, als auch als Bremsgegenfläche geeignet sein. Dadurch werden hohe Anforderungen an das Material bedingt. Daher ist bei der Materialwahl stets ein Kompromiß zwischen den beiden Grenzeigenschaften erforderlich.

Für die Erfindung ist von Bedeutung, daß die Bremsfläche mit Komponente quer zur Drehachse der Laufrolle an eine im Vergleich zur Laufrolle durchmesserkleinere Bremsgegenfläche gepreßt wird. Die Lauffläche wird dabei vorzugsweise nicht von der Bremsfläche beaufschlagt. Durch diese funktionelle Trennung bedingt bleibt die Anpreßkraft und der Weg der Bremsfläche unabhängig vom Zustand der Laufrolle stets gleich. Selbst beim Anpressen mit Komponente ausschließlich in Richtung quer zur Drehachse bleibt die Bremswirkung bei einer erfindungsgemäßen Laufrolle stets unverändert.

Dies gilt für jedwede mechanische Ausführungsform der erfindungsgemäßen Umfangsbremse. Falls die Bremsfläche stets um einen konstanten Weg von der Frei- in die Bremsstellung verschoben wird, aber auch bei einer in Richtung auf die Bremsstellung federbeaufschlagten Umfangsbremse trifft dies zu.

Die Erfindung vereint daher eine gute Bremswirkung mit einer vorteilhaften Bremsgeometrie. Eine Umfangsbremse gemäß der vorliegenden Erfindung bedingt eine kompakte und funktionelle Ausführung, da die Bremsgegenfläche einfach von oben, daß heißt von der Seite der Stellwelle her, beaufschlagt werden kann. Im Gegensatz zur Backenbremse, welche eine vergleichsweise große Axialerstreckung und eine vergleichsweise aufwendige Konstruktion erfordert, ist bei der vorliegenden Erfindung keine Umlenkung der Betätigungskraft erforderlich. Zudem erfolgt die Betätigung lediglich in einer Richtung. Pro Laufrolle ist lediglich eine Bremsfläche erforderlich. Daher kann die Rollenaufhängung einer solchen Laufrolle besonders schmal ausgeführt werden.

Ein weiterer Vorteil der Erfindung ergibt sich daraus, daß jeweils für die Lauffläche und für die Bremsgegenfläche ein anderes Material verwendet werden kann. Dadurch kann das jeweils optimale Material ausgewählt werden, so daß im Ergebnis die Laufeigenschaften der Laufrolle unabhängig von den Eigenschaften der Umfangsbremse optimiert werden können.

Bevorzugte Ausgestaltungen der vorliegenden Erfindung sind durch die Unteransprüche gegeben.

Eine besonders kompakte Ausführung sowie einfache Geometrie ergibt sich, wenn die Bremsgegenfläche von zumindest einer Ringausnehmung der Laufrolle gebildet wird. Wenn dabei die Ringausnehmung eine stirnseitige Durchmesserstufe der Laufrolle ist, so ist die Durchmesserstufe stirnseitig in axialer Richtung offen. Deshalb kann sich Schmutz in der Ringausnehmung nicht festsetzen.

Die Durchmesserstufe kann aus dem Material des Laufrollenbelags herausgearbeitet sein. Diese Art der Fertigung ist vergleichsweise einfach. Es ist auch möglich, daß der Laufrollenbelag aus einem äußeren Ring aus dem Material für die Lauffläche und einer inneren Kreisscheibe aus dem Material für die Bremsgegenfläche besteht. Das hat den Vorteil, daß die Lauf- und Bremseigenschaften bei einfacher Fertigung trotzdem praktisch unabhängig voneinander optimiert werden können. Alternativ wird vorgeschlagen, daß die Durchmesserstufe von einer stirnseitig aufgebrachten und drehfest mit der Laufrolle verbundenen Drehscheibe gebildet wird. Dann kann die Drehscheibe völlig unabhängig von der Laufrolle gefertigt werden. Solch eine Drehscheibe kann auch als Ersatzteil verfügbar gehalten werden, so daß bei starker Beschädigung der Bremsgegenfläche oder der Drehscheibe nicht die ganze Laufrolle ersetzt werden muß. Wenn das Material der Drehscheibe unter Druck gummielastisch ist, so hat das den Vorteil, daß einerseits eine gute Bremswirkung aufgrund erhöhter Reibung erzielt wird. Andererseits gibt das Material der Drehscheibe bei Beaufschlagung durch die Bremsfläche entsprechend nach. Daraus resultiert - insbesondere bei einer Umfangsbremse mit festem Bolzenweg - eine geringere mechanische Belastung des Bremssystems.

Besonders bevorzugt ist es, wenn die Bremsgegenfläche der Durchmesserstufe sich ausschließlich in axialer Richtung erstreckt. Dann ist nämlich bei Beaufschlagung der Bremsgegenfläche mittels der Bremsfläche in Richtung quer zur Drehachse die gesamte Bremskraft praktisch senkrecht zur Kontaktfläche von Bremsfläche und Bremsgegenfläche. Da für die zur Bremsung nutzbare Bremskraft gilt

$$F_{Br} = \mu \times F_N$$

$F_{Br}$: Bremskraft
$\mu$: Haftreibungskoeffizient
$F_N$: wirkende Normalkraft

ist somit die Bremskraft maximal. Es wird vorgeschlagen, daß die Bremsgegenfläche von einem Material gebildet wird, das druckhärter als das Material des Laufrollenbelags ist. Während für gute Laufeigenschaften und erschütterungsfreie Fahrt eine Laufrolle aus einem eher nachgiebigen, daß heißt weich elastischen Material ausgebildet sein sollte, ist es von Vorteil, wenn das Material des Laufrollenbelags druckhärter, daß heißt weniger nachgiebig ist. Dadurch wird zum einen eine übermäßig Abnutzung des Materials der Bremsgegenfläche verhindert und zum anderen ein unerwünschtes Blockieren der Rollen erschwert.

Eine besonders einfache Ausgestaltung der vorliegenden Erfindung ist es, wenn die Ringausnehmung in radialer Richtung von außen eingebracht ist. Die Ringausnehmung kann dann einfach eingedreht werden.

Besonders bevorzugt wird vorgeschlagen, daß in Drehrichtung der Laufrolle gesehen bei Annäherung an die Bremsfläche bis zum Flächenkontakt zwischen Bremsfläche und Bremsgegenfläche die Einhüllenden von Bremsfläche und Bremsgegenfläche einen keilförmigen Zwickel zwischen sich aufspannen. Wird die Laufrolle während der Fahrt abgebremst, so gewährleistet dies einen ruckelfreien Übergang von der Frei- in die Bremsstellung. Dabei ist wesentlich, daß die Form der Einhüllenden von Bremsfläche und Bremsgegenfläche derart ausgebildet ist, daß in beiden Drehrichtungen der Laufrolle ein anspruchsgemäßer Zwickel entsteht. Die Verzögerung, welche von der Rolle auf die Nutzlast übertragen wird, ist dann unabhängig von der Fahrtrichtung und von der Stellung der Rolle kontinuierlich. Dies kann dadurch realisiert werden, daß die Umfangsbremse von einem konkav gekrümmten Hebel gebildet wird, dessen Krümmungsradius zumindest geringfügig größer als der Radius der ersten Einhüllenden ist und mittels Druckvorrichtung radial von außen auf die Laufrolle gedrückt wird. Ein geringfügig größerer Krümmungsradius des Hebels bedingt dabei den erfindungsgemäßen Zwickel in jeder der beiden Drehrichtungen und somit ein kontinuierliches Bremsverhalten.

Eine einseitige Beanspruchung der Laufrolle bei der Bremsung wird dadurch vermieden, daß an beiden Stirnseiten der Laufrolle jeweils eine Durchmesserstufe vorgesehen ist. Dann wird nämlich die Bremskraft gleichermaßen auf beide Stirnseiten der Laufrolle aus-geübt. Dadurch werden insbesondere Deviationsmo-mente der Laufrolle bei der Bremsung vermieden. Dies führt insgesamt zu einer minimalen Querbeanspruchung von Achse und Rollenaufhängung. Damit eine Umfangsbremse besonders hohen Beanspruchungen standhält, ist es von Vorteil, wenn zumindest ein axial randseitiges Stegsegment eines Bremsklotzes die Bremsfläche bildet. Das axiale randseitige Stegsegment ist dann integraler Bestandteil eines massiven Bremsklotzes. Solch ein massiver Bremsklotz bietet eine sehr hohe Stabilität. Wenn an beiden Stirnseiten der Laufrolle Durchmesserstufen sind, so kann ein massiver, durchgängiger Bremsklotz vorgesehen sein, welcher jeweils zwei zu den Durchmesserstufen korrespondierende Bremsflächen hat. Dies ist eine besonders bevorzugte und besonders stabile Ausgestaltung der vorliegenden Erfindung. Der Mittelbereich des Bremsklotzes zwischen den Durchmesserstufen ist eine Brücke mit der Funktion einer herkömmlichen Umfangsbremse auf dem Laufrollenbelag, z.B. bei Ersatz der Laufrolle durch eine herkömmliche Laufrolle oder bei Verschluß der Durchmesserstufen

Wenn die Bremsfläche mittels einer Rückstellfeder in Abhebestellung gehalten wird, so ist die Bremsfläche insbesondere spielfrei in Abhebestellung gehalten. Dadurch wird einerseits eine zusätzliche Beanspruchung der Bremsmechanik vermieden; andererseits wird verhindert, daß die Bremsfläche unbeabsichtigt in Kontakt mit der Bremsgegenfläche geraten kann. Ferner kann eine solche Umfangsbremse auch derart ausgebildet werden, daß nach Ausübung einer vergleichsweise kleinen Aktivierungskraft die Bremsfläche selbsttätig in die Freistellung schnappt.

Die folgenden Ausführungen betreffen eine vorteilhafte Ausgestaltung der Betätigungsmechanik.

Zum Feststellen der Umfangsbremse wird üblicherweise ein Totpunktmechanismus verwendet, der - einmal über den Totpunkt gebracht - nur noch mechanisch in die Lösestellung zurückverbracht werden kann.

Die bekannte Ausführungsform mit drehbarer Mehrkantwelle und linearbewegtem Bolzen erfordert eine Drehlagerung für das Bremspedal und den Exzenter außerhalb des Befestigungsflansches, mit dem die Laufrollengabel der Laufrolle ortsfest gelagert ist.

Zudem wird eine Vertikalführung für den Bolzen vorzusehen sein, die aus Gründen der Kompatibilität im wesentlichen im Zentrum des Befestigungsflansches anzuordnen ist, um derartige Laufrollen ohne zusätzliche konstruktive Veränderungen auch als Lenkrollen einsetzen zu können.

Damit sind allerdings den aufbringbaren Bremskräften auch Grenzen gesetzt, weil der Bremsklotz praktisch nur im Zentrumsbereich des Befestigungsflansches von dem vertikal geführten Bolzen beaufschlagt werden kann.

Hieraus ergeben sich auch gewisse Nachteile für die Kinematik des Bremsgestänges, die trotz guter Einbauverhältnisse eine beachtliche Bauhöhe erfordern. Die einzelnen Getriebeglieder des Bremsgestänges können auch nicht völlig verschleißfrei aufeinander abgleiten. Die Lagerung der Mehrkantwelle muß zudem zweiseitig erfolgen, um Verkantungseffekte auszuschließen.

Die besondere Ausführungsform, auf die nun eingegangen wird, will bei kompakterer Bauform die obigen Nachteile vermeiden und dennoch alle Vorteile der Umfangsbremse bieten.

Aus der Ausführungsform nach Anspruch 14 ergibt sich der Vorteil, daß eine unmittelbare Umsetzung der Drehbewegung des Fußpedals in Bremsklotz-Anpreßdruck erfolgt.

Dieser Vorteil wird erreicht durch die drehbar gelagerte Achswelle, die unmittelbar am Bremsklotz gelagert ist.

Demgemäß muß also der Bremsklotz so ausgebildet sein, daß er neben seiner Bremsfunktion auch die Lagerfunktion für das Fußpedal erfüllt. Vorzugsweise ist der Bremsklotz hierzu als ein endseitig gelagerter schwenkbarer voluminöser Körper ausgebildet, der eine Querbohrung für die Aufnahme der Achswelle aufweist.

Die Anordnung der Achswelle am Bremsklotz ist dort vorzusehen, wo im Hinblick auf die Drehrichtung des Exzenters beim Betätigen des Fußpedals eine Annäherung bis hin zur kontaktgebundenen Anpressung der Bremsfläche des Bremsklotzes an die Umfangsfläche der Laufrolle stattfindet.

Wesentlich an der Erfindung ist also die unmittelbare Lagerung der Achswelle für das Fußpedal am Bremsklotz und die Tatsache, daß die Achswelle auch zur Lagerung des Exzenters dient. Auf diese Weise ist erreicht, daß mit Betätigung des Fußpedals der drehbare Exzenter zunächst einmal den Anpreßdruck für den Bremsklotz hervorruft, so lange bis er über seine Totpunktstellung gegangen ist. Dann dient der Exzenter zusätzlich der Festhaltung des Bremsklotzes in seiner Bremsstellung, die lediglich unter Kraftaufwendung rückwärts über die Totpunktstellung hinaus wieder gelöst werden kann.

Die drehbare Achswelle soll vorzugsweise in einer Bohrung am Bremsklotz stecken, welche parallel zur Schwenkachse des Bremsklotzes und somit auch parallel zur Drehachse der Laufrolle liegt. Auf diese Weise wird eine optimale Umsetzung des Pedalwegs in Bremsdruck erzielt.

Der Bremsklotz selber ist bevorzugt einstückig auszuführen. Er kann aus einem gespritzten Kunststoffteil oder einem gegossenen Al-Keil bestehen. Da der Bremsklotz naturgemäß einem gewissen Verschleiß unterliegt, kann er in leicht auswechselbarer Weise an der Laufrolle angebracht werden.

Wesentlich an dieser Weiterbildung der Erfindung ist die Tatsache, daß die Achswelle des Fußpedals die Schwenkbewegung des Bremsklotzes mitvollzieht, während der zugehörige Exzenter für den notwendigen Anpreßdruck sorgt.

Dies bietet den zusätzlichen Vorteil, daß ein Teil des auf das Fußpedal aufgebrachten Druckes bereits zu Bremsbetätigung ausgenutzt wird, während zugleich der Exzenter zwischen dem Bremsklotz und der ortsfesten Exzentergegenfläche durch Drehung eingezwängt wird.

Es muß daher nicht der Exzenter die gesamte notwendige Anpreßkraft für den Bremsklotz hervorrufen, sondern nur denjenigen Anteil, der nicht bereits durch das Fußpedal über die Achswelle auf den Bremsklotz ausgeübt wird.

Die zugehörige Exzenterfläche unterliegt daher einem deutlich geringerem Verschleiß als bei ortsfester Lagerung der Achswelle. Die Leichtgängigkeit der Drehlagerung der Achswelle im Bremsklotz verringert den etwaigen Verschleiß zusätzlich.

In besonderer Ausführungsform der Erfindung sitzt der Exzenter starr an dem Fußpedal und wird über das Fußpedal mit der Achswelle verbunden.

Der Exzenter bildet somit zusammen mit dem Fußpedal eine insgesamt dreh- und druckstarre Einheit, die als Einheit drehfest auf die Achswelle aufgeschoben werden kann.

Eine andere Ausführungsform sieht vor, den Exzenter als ein vom Fußpedal separates Bauteil drehfest mit der Achswelle zu verbinden.

Hierzu kann der Exzenter wie das Fußpedal auf die Achswelle aufgeschoben werden. Durch geeignete Formschlußverbindungen ist die drehfeste Verbindung somit hergestellt. Im Falle etwaigen Verschleisses läßt sich der Exzenter somit kostengünstig auswechseln.

In Weiterbildung des Gedankens eines vom Fußpedal unabhängigen Exzenters wird zusätzlich vorgeschlagen, daß der Exzenter ein quer zur Achswelle liegender Einschraubstift ist, der in eine quer in die Achswelle eingebrachte Gewindebohrung eingeschraubt ist. Die Gewindebohrung liegt vorzugsweise zentral zwischen zwei außerhalb liegenden Drehlagerstellen der Achswelle am Bremsklotz. Auf diese Weise wird die optimale und symmetrische Kraftverteilung der Exzenterkräfte auf die Drehlagerstellen der Achswelle erzielt.

Diese Weiterbildung der Erfindung bietet den Vorteil, daß über die Einschraubtiefe des Einschraubstiftes der wirksame Exzenterradius individuell und abhängig von Fertigungsgenauigkeiten der Laufrolle einstellbar ist. Darüber hinaus kann die Einschraubtiefe des Einschraubstiftes auch verschleißbedingt nachgeführt werden, falls erforderlich.

Zu diesem Zweck soll zwischen dem Einschraubstift und der Gewindebohrung in der Achswelle eine selbsthemmende Gewindepaarung angestrebt werden. Die Selbsthemmung kann auch durch zusätzliche Gewindeverklebung erzielt werden.

In Weiterbildung der Erfindung ist vorgesehen, die Exzentergegenfläche zwar ortsfest mit der Laufrollengabel zu verbinden, aber zusätzlich derart elastisch abzufedern, daß beim Auflaufen der Exzenterfläche die Exzentergegenfläche ausweichen kann.

Dies bietet den Vorteil stets genau definierter Bremsklotz-Anpreßkräfte ohne die Gefahr einer Selbsthemmung. Durch das elastische Ausweichen der Exzentergegenfläche läßt sich zudem der notwendige Totpunkt zum Feststellen der Umfangsbremse leicht realisieren.

Sieht man die Exzentergegenfläche an einer Federzunge vor, so wird vorgeschlagen, die Federzunge lediglich an einem Ende ortsfest festzulegen. Das andere Ende der Federzunge soll dann auf einem ortsfesten Widerlager aufliegen. Bei Betätigung des Exzenters wird das Widerlager von der Federzunge zwar in Druckrichtung beaufschlagt, dennoch kann die Federzunge elastisch durchfedernd ausweichen, wenn ihr Widerlagerende axial nicht festgelegt ist. Dies wird durch die Möglichkeit einer längsgerichteten Ausgleichbewegung realisiert.

Der besondere Vorteil dieser Weiterbildung ist die zusätzliche Eignung in Weiterbildung der Erfindung für eine Lenkrolle.

Bildet man nämlich die Federzunge so aus, daß sie hinsichtlich der Lenkachse eine radiale Verzahnung besitzt, welche in eine ortsfeste Gegenverzahnung eingreift, die ebenfalls bezüglich der Lenkachse radial gerichtet ist, läßt sich mit einer derartigen Federzunge nicht nur die Umfangsbremse elastisch abfedern sondern zugleich auch die Lenkrolle feststellen, sobald die radialen Verzahnungspartner im gegenseitigen Eingriff sind. Hierzu werden Ausführungsbeispiele gegeben.

Die Erfindung wird anhand von in den Zeichnungen dargestellten Ausführungsbeispielen erläutert. Es zeigen:

Fig.1  ein Ausführungsbeispiel der Erfindung quer zur Drehachse der Laufrolle gesehen und teilweise geschnitten,

Fig.2  ein Ausführungsbeispiel mit zweiseitigem Hebel in Richtung der Drehachse gesehen,

Fig.3  eine Ansicht in axialer Richtung und quer zur Drehachse eines Ausführungsbeispiels mit aufgesetzter Drehscheibe,

Fig.4  eine Laufrolle mit erfindungsgemäßer Umfangsbremse in Richtung quer zur Drehachse gesehen,

Fig.5  das Ausführungsbeispiel der Fig.4 in Richtung der Drehachse gesehen und teilweise geschnitten,

Fig.6a bis 6d  verschiedene Ausgestaltungen der Bremsgegenflächen quer zur Drehachse gesehen.

Fig.7  ein Ausführungsbeispiel der Erfindung nach Anspruch 14

Fig.7a  eine Detailansicht der Darstellung gemäß Fig.7,

Fig.8  ein weiteres Ausführungsbeispiel der Erfindung,

Fig.8a  eine Detailansicht des Ausführungsbeispiels gemäß Fig.8,

Gleiche Bezugszeichen bezeichnen in allen Figuren stets dieselben, konstruktiven Merkmale.

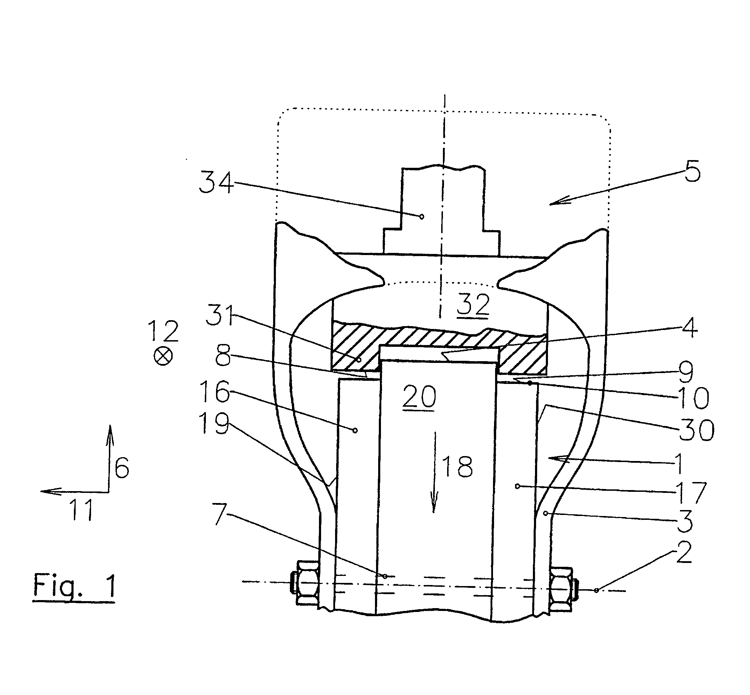

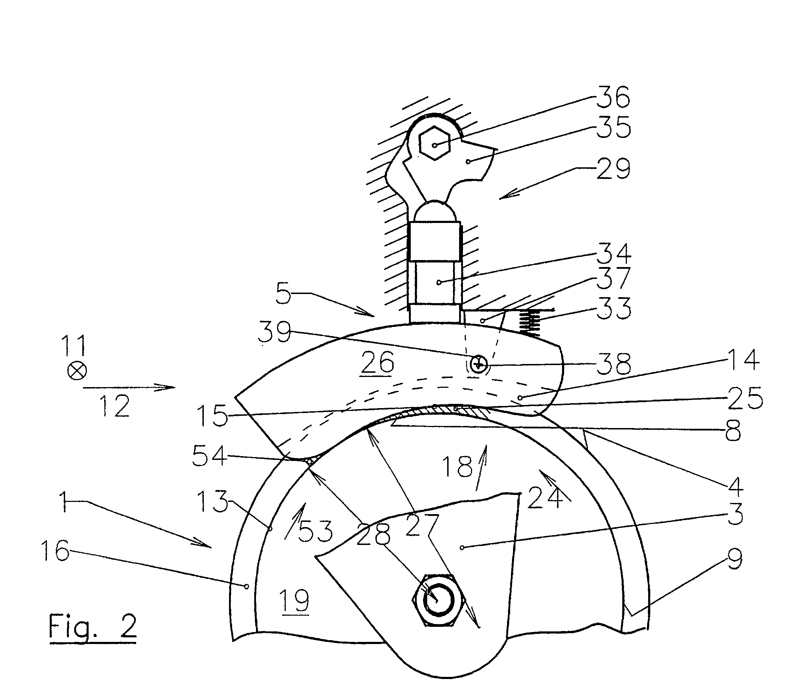

Fig.1 zeigt eine erfindungsgemäße Laufrolle 1 mit Aufhängung 3 und Umfangsbremse 5 in Richtung quer zur Achslinie 2 gesehen. Die Umfangsbremse 5 ist in Fig.1 in der Freistellung gezeigt. Die Umfangsbremse 5 wird mittels des vertikal geführten Druckbolzens 34 druckbeaufschlagt und dadurch praktisch in Richtung 6 quer zur Drehachse 7 der Laufrolle 1 in die Bremsstellung verbracht. In der Bremsstellung wird eine Bremsfläche 8 an eine drehfest mit der Laufrolle 1 verbundene Bremsgegenfläche 9 angepreßt. Die Bremsgegenfläche 9 erstreckt sich mit einer zur Bremsfläche 8 der Umfangsbremse 5 korrespondierenden Kontur 10 in axialer Richtung 11 sowie in Umfangsrichtung 12 der Laufrolle 1. Dabei ist wesentlich, daß die Bremsgegenfläche 9 von einer konzentrisch zur Laufrolle 1 angeordneten und durchmesserkleineren ersten Einhüllenden 13 (siehe Fig.2) begrenzt wird. Diese erste Einhüllende 13 kann beispielsweise auch von mehreren Abschnitten oder Segmenten bei Drehung der Laufrolle 1 beschrieben werden. Im vorliegenden Fall ist die erste Einhüllende 13 praktisch gleich der Bremsgegenfläche 9. Es sind in dem gezeigten Ausführungsbeispiel zwei jeweils an einer Stirnseite 19,30 angeordnete Ringausnehmungen 16,17 vorgesehen, welche die Bremsgegenfläche 9 bilden. Die beiden Ringausnehmungen 16,17 weisen dabei praktisch gleiche Abmessungen auf. Die Bremsfläche 8 wird im vorliegenden Fall von zwei Ringsegmenten 14 gebildet, welche von jeweils einer weiteren, sich entlang der ersten Einhüllenden 13 erstreckenden, zweiten Einhüllenden 15 begrenzt werden. Die Ringsegmente 14 sind jeweils als Stegsegment 31 eines massiven Bremsklotzes 32 ausgebildet. Dies verleiht den beiden Ringsegmenten 14 (siehe Fig.2) eine hohe Stabilität und Zusammenhalt. Es können natürlich auch einzelne Ringausnehmungen 16,17 vorgesehen sein, welche von einzelnen Ringsegmenten 14 (siehe Fig.2), welche separat ausgebildet sind, beaufschlagt werden.

Die Ringausnehmungen 16,17 schließen die Lauffläche 4 zwischen sich ein. Im gezeigten Ausführungsbeispiel sind die Ringausnehmungen stirnseitige Durchmesserstufen der Laufrolle 1, welche aus dem Material des Laufrollenbelags 20 herausgearbeitet sind. Die Bremsgegenflächen 9 der Durchmesserstufe erstrecken sich ausschließlich in axialer Richtung 11. Dies gilt bei dem vorliegenden Ausführungsbeispiel analog für die korrespondierenden Bremsflächen 8. Die Bremsfläche 8 greift somit mit der gesamten Bremskraft an der Bremsgegenfläche 9 an. Die Bremsgegenfläche 9 kann aus demselben Material wie der Laufrollenbelag 20 bestehen; sie kann aber auch aus einem anderen Material gebildet werden. Das Material der Bremsgegenfläche 9 ist dabei vorzugsweise druckhärter als das Material des Laufrollenbelags 20. Im vorliegenden Fall sind beide Ringausnehmungen 16,17 in radialer Richtung 18 von außen in den Laufrollenbelag 20 eingebracht.

In Fig.1 ist noch gestrichelt die Drehachse 7 gezeigt.

Fig.2 zeigt eine erfindungsgemäße Laufrolle 1 mit Umfangsbremse 5 in axialer Richtung 11 gesehen. Es ist die Stirnseite 19 der Laufrolle 1 mit einer Ringausnehmung 16 gezeigt. Die Bremsgegenfläche 9 wird dabei von der ersten Einhüllenden 13 begrenzt. Anstelle eines Bremsklotzes 32 ist im vorliegenden Ausführungsbeispiel ein Hebel 26 vorgesehen. Der Hebel 26 hat ein in axialer Richtung 11 randseitig angeordnetes Ringsegment 14. Das Ringsegment 14 bildet die Bremsfläche 8 und wird von der sich entlang der ersten Einhüllenden 13 erstreckenden, zweiten Einhüllenden 15 begrenzt. In der angegebenen Drehrichtung 24 der Laufrolle 1 gesehen spannen die beiden Einhüllenden 13,15 bei Annäherung an die Bremsfläche 8 bis zum Flächenkontakt zwischen Bremsfläche 8 und Bremsgegenfläche 9 einen keilförmigen Zwickel 25 zwischen sich auf. Dies wird dadurch erreicht, daß der Hebel 26, welcher die Umfangsbremse bildet, konkav gekrümmt ist und daß dessen Krümmungsradius 27 geringfügig größer als der Radius 28 der ersten Einhüllenden 13 ist. Im gezeigten Ausführungsbeispiel wird in jeder der beiden möglichen Drehrichtungen 24,53 gesehen ein Zwickel 25,54 zwischen Bremsfläche 8 und Bremsgegenfläche 9 aufgespannt. Der Hebel 26 ist ein zweiseitiger Hebel. Die eine Seite des Hebels 26 wird von einer Druckvorrichtung 29 beaufschlagt. Der Hebel ist an einer Hebelaufhängung 37 angebracht, welche ein Lager 39 für den Hebel trägt. Der Hebel 26 kippt bei Druckbeaufschlagung um die Hebelachse 38 in Richtung auf die Bremsstellung. Die Druckvorrichtung 29 beinhaltet einen Druckbolzen 34. Dieser beaufschlagt den Hebel 26 an einer Seite und wird von einem Exzenter 35 linear getrieben. Der Exzenter hat ein Mehrkant-, im gezeigten Falle ein Sechskantloch. Der Exzenter 35 wird mittels einer hier nicht gezeigten Sechskantwelle, welche durch das Sechskantloch 36 gesteckt wird, verdreht. Auf der gegenüberliegenden Hebelarmseite ist der Hebel 26 mit einer Rückstellfeder 33 in Richtung auf die Freistellung beaufschlagt. Durch diesen Hebel getrieben wird die Umfangsbremse 5 mittels der Druckvorrichtung 29 radial von außen auf die Laufrolle 1 gedrückt.

Die Bremsfläche 8 wird mittels der Rückstellfeder 33 weiterhin in der Abhebestellung gehalten, falls der Druckbolzen 34 sich in der Freistellung befindet.

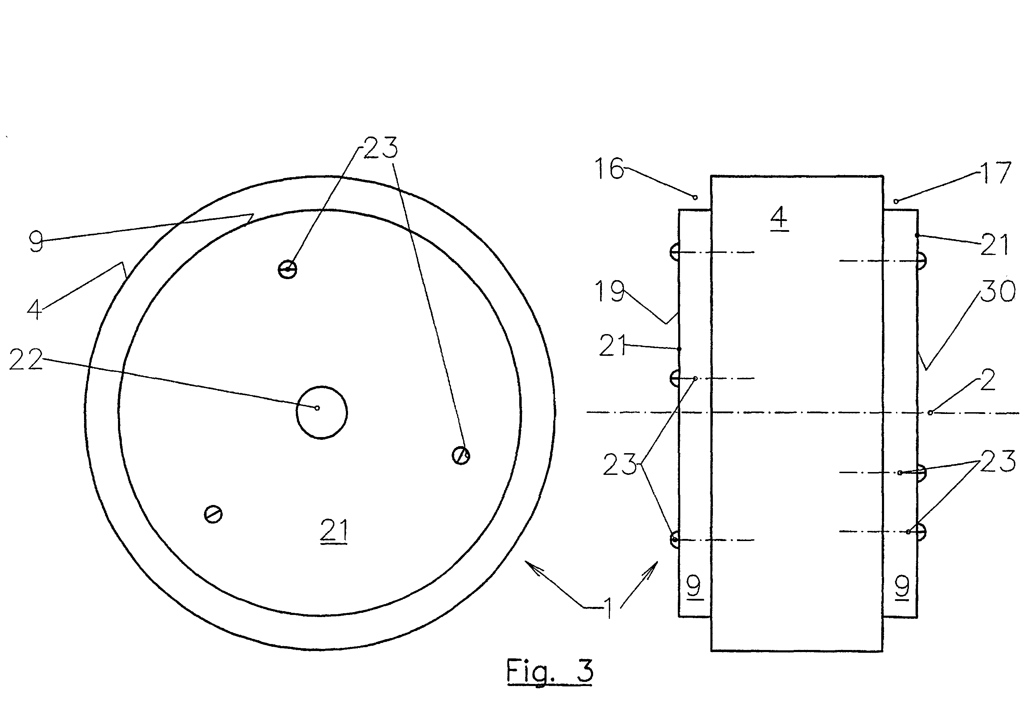

Fig.3 zeigt eine erfindungsgemäße Laufrolle 1 in axialer Richtung 11 und in Richtung 6 quer zur Achslinie 2 gesehen. Es sind zwei Drehscheiben 21 vorgesehen, welche stirnseitig aufgebracht und drehfest mit der Laufrolle 1 verbunden sind. Die Drehscheiben 21 bilden zwei stirnseitige Durchmesserstufen. Die Drehscheiben 21 sind mit Befestigungsschrauben 23 an der Laufrolle 1 angebracht. Sie weisen jeweils eine zentrale Achsausnehmung 22 zum Durchstecken der Achse 7 und Befestigung derselben auf. Die Drehscheiben 21 bilden die Bremsgegenflächen 9. Es entstehen stirnseitige Ringausnehmungen 16, 17. Die Drehscheiben 21 bilden die Stirnseiten 19,30 der Laufrolle 1.

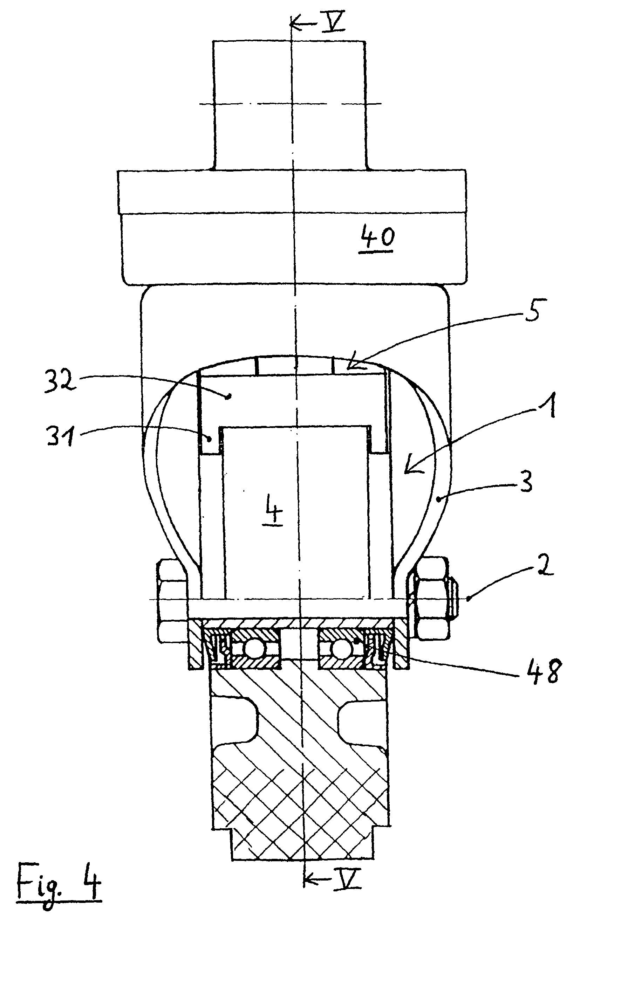

Fig.4 zeigt eine Ansicht in Richtung 6 quer zur Drehachse 7 eines Ausführungsbeispiels der vorliegenden Erfindung. Die Laufrolle 1 sitzt dabei an einem Schwenklagertopf 40, an welchem die Aufhängung 3 der Laufrolle 1 angebracht ist. Es ist ein Bremsklotz 32 mit Stegsegmenten 31 gezeigt, welcher an der Bremsgegenfläche 9 angreift. Unterhalb der Achslinie 2 ist die Laufrolle 1 aufgeschnitten dargestellt. Dadurch ist das Drehlager 48 der Drehachse 7 zu sehen. Das Drehlager 48 ist im gezeigten Fall ein Rillenkugellager.

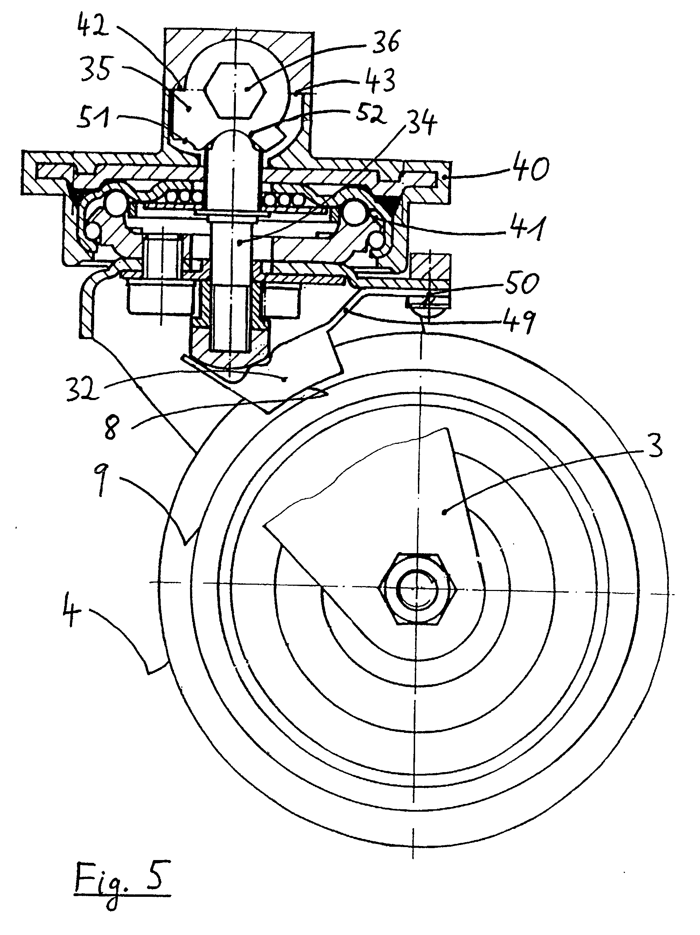

Fig.5 zeigt eine Laufrolle 1 mit Umfangsbremse 5, welche entlang der Linie V-V der Fig.4 aufgeschnitten ist. Die Rollenaufhängung 3 ist dabei teilweise aufgelassen. Fig.5 zeigt die Umfangsbremse 5 in der Freistellung. Der Bremsklotz 32 hat Bremsflächen 8, welche in der Bremsstellung an der Bremsgegenfläche 9 angreifen. Wie oben gezeigt, wird der Bremsklotz 32 mittels eines Druckbolzens 34 getrieben. Der Bremsklotz 32 ist mit einem Federblech 49 an einem Widerlager 50 befestigt. Das hat den Vorteil, daß aufgrund der Elastizität des Federbleches 49 der Bremsklotz 32 in Richtung auf die Freistellung getrieben wird. Die ganze Vorrichtung ist damit spiel- und schlackerfrei. Der Druckbolzen 34 wird wie oben von einem Exzenter 35 mit Ausnehmungen 51,52 für die Bremsstellung bzw. die Freistellung getrieben. Der Exzenter 35 schlägt in Richtung auf die Freistellung an dem Anschlag 42 und in Richtung auf die Bremsstellung an dem Anschlag 43 an. In Fig.4 ist ferner in dem aufgeschnittenen Schwenklagertopf das Schwenklager 41 gezeigt.

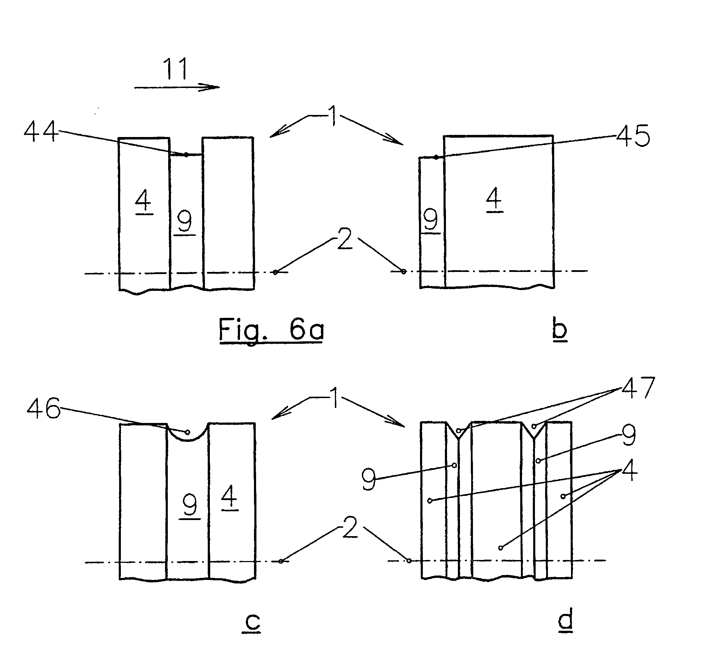

Fig.6a bis 6d zeigen schließlich Laufrollen 1, welche mit verschiedenen Bremsgegenflächen 9 versehen sind. In Fig. 6a wird die Bremsgegenfläche 9 von einer Mittelstufe 44 gebildet. Die Mittelstufe 44 ist in axialer Richtung 11 zentral angeordnet, so daß zwei gleichförmige Laufflächen 4 beidseitig der Mittelstufe 44 entstehen.

Fig.6b zeigt eine Randstufe 45. Diese Randstufe 45 ist an einer Stirnseite der Laufrolle 1 angeordnet.

Fig.6c zeigt eine Bogenausnehmung 46, deren Grund die Bremsgegenfläche 9 bildet.

Fig.6d zeigt eine Laufrolle 1 mit zwei innerhalb der Lauffläche 4 angebrachten Keilausnehmungen 47.

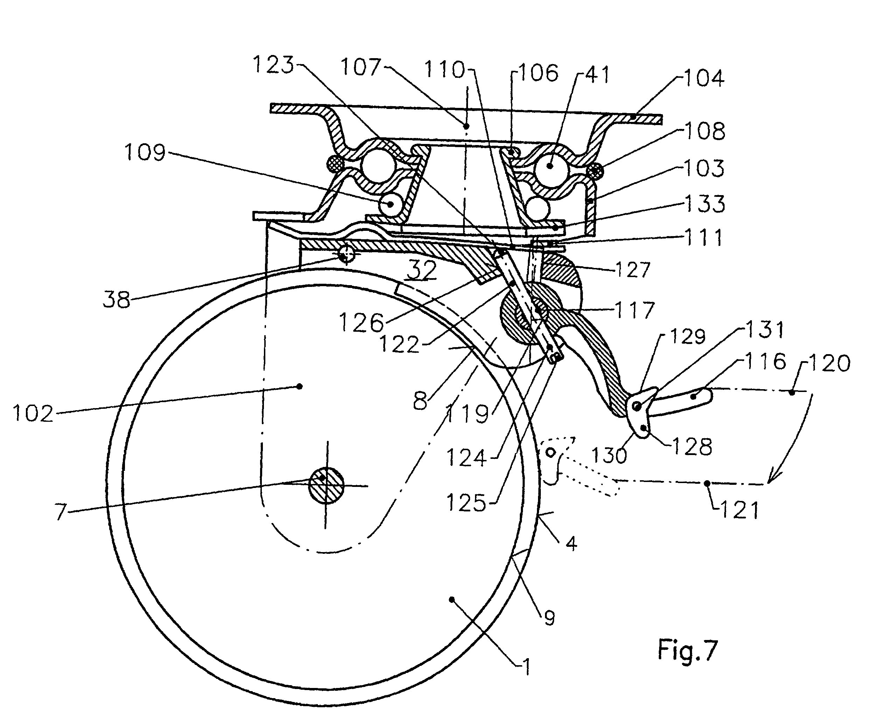

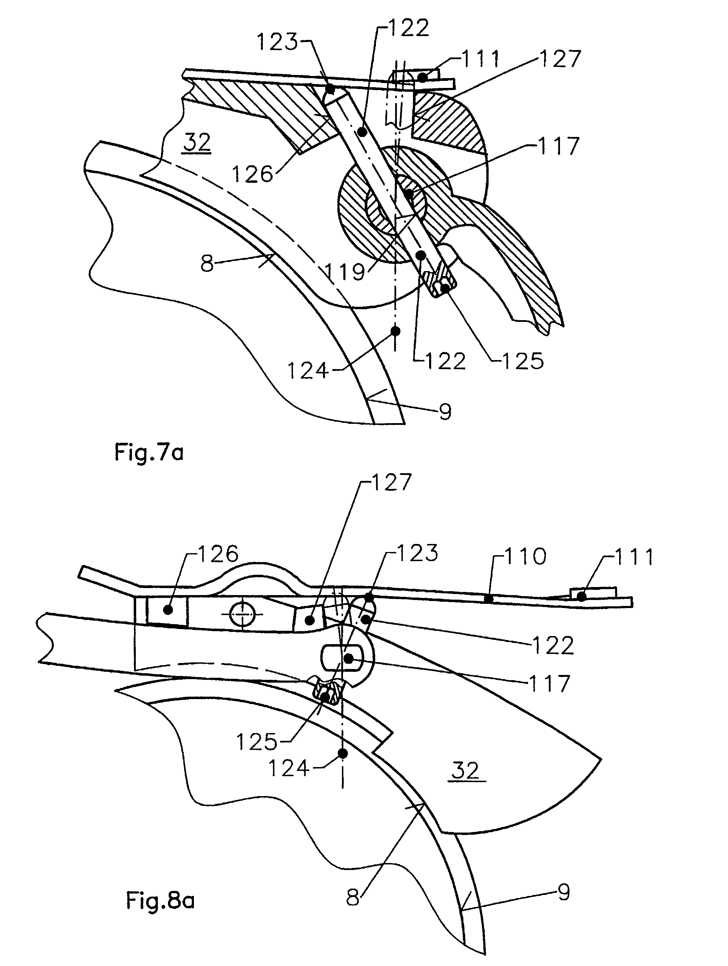

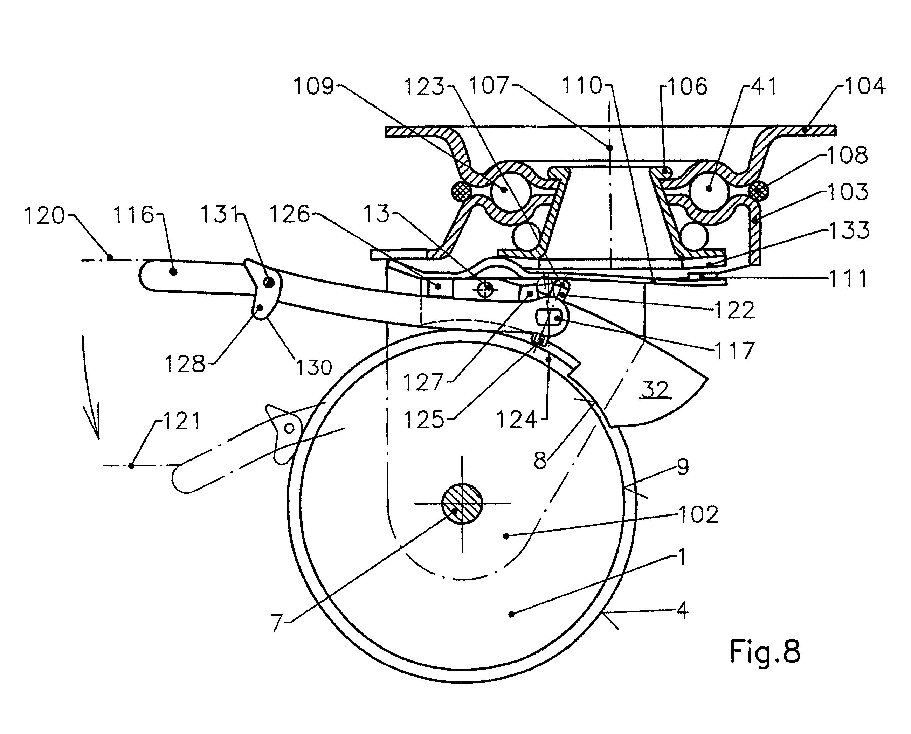

Die Figuren 7 und 8 zeigen eine Laufrolle 1, die in einer Laufrollengabel 102 schwenkbar gelagert ist. Die Erfindung ist allerdings - dies soll ausdrücklich gesagt sein-nicht beschränkt auf sogenannte Lenkrollen, sondern ohne weiteres auch an nicht lenkbaren Laufrollen realisierbar.

Die Laufrollengabel derartiger Laufrollen weist im allgemeinen Fall einen Befestigungsflansch zur ortsfesten Anbringung auf. In den gezeigten Ausführungsbeispielen wird der Befestigungsflansch realisiert durch das Schwenklager. Es handelt sich daher um eine Lenkrolle. Das Schwenklager besteht aus einem unteren Lagertopf 103, einem oberen Lagertopf 104 und dem dazwischen angeordneten Schwenklager 41. Der obere Lagertopf 104 dient der Anbringung der Laufrolle an einem zu verfahrenden Container oder dergleichen.

Starr verbunden ist bei Lenkrollen der obere Lagertopf 104 mit einem feststehenden Rastenkranz 106, der am Schwenklager vorbei in Richtung zur Laufrollengabel verläuft.

Die vertikalstehende Schwenkachse 107 läuft durch das Zentrum des Schwenklagers 41. Sie ist bezüglich der Drehachse 118 asymmetrisch, um den Lenkrollen eine beim Fahren bevorzugte stabile Nachlaufstellung zu geben.

Das Schwenklager 41 ist nach außen durch einen Schmutzabweisungsring 108 abgedichtet. Eine Hilfslagerung 109 stützt den unteren Lagertopf 103 gegenüber dem feststehenden Rastenkranz 106 so ab, daß Verkantung des feststehenden Rastenkranzes 106 im wesentlichen vermieden wird.

Mit dem unteren Lagertopf 103 ist die Laufrollengabel 102 fest verbunden. Die Laufrollengabel 102 vollzieht daher die Schwenkbewegung des unteren Lagertopfes 103 stets synchron mit. Im Falle der Ausführung als nichtlenkbare Laufrolle würde die Laufrollengabel 102 starr mit dem oberen Lagertopf 104 zu verbinden sein, der dann unter Weglassung des Schwenklagers 105 auszuführen wäre.

Da der feststehende Rastenkranz 106 im vorliegenden Fall starr mit dem oberen Lagertopf 104 verbunden ist, kann er der Bremsstellung der Lenkrolle dienen. Zu diesem Zweck wird eine Einrastfeder 110 drehstarr mit der Laufrollengabel 102 verbunden, welche an ihrem Ende sogenannte Rastvorsprünge 111 aufweist, die in zugeordnete Gegenvorsprünge des Rastenkranzes 110 eingreifen.

Wird die Einrastfeder 110 in Richtung zum Rastenkranz 106 gedrückt, so greift sie mit ihren Rastvorsprüngen 110 in die Gegenvorsprünge des Rastenkranzes 106 ein und eine Lenkbewegung um die Lenkachse 107 ist unterbunden.

Wesentlich ist nun, daß an der Laufrollengabel 102 ein Bremsklotz 32 vorgesehen ist, der parallel zur Drehachse 7 der Laufrolle 1 schwenkbar ist. Hierzu dient ein Fußpedal 116, welches sich am Bremsklotz 32 abstützt. Durch Verschwenken des Fußpedals 116 wird der Bremsklotz 32 um seine Bremsklotzachse 38 so verschwenkt, daß dabei seine Bremsfläche 114 in Kontakt mit der Bremsgegenfläche 115 der Laufrolle 101 gerät. Durch weiteres Verschwenken des Bremsklotzes 32 wird zwischen der Bremsfläche 8 und der Bremsgegenfläche 9 ein so hoher Anpreßdruck aufgebaut, daß die erforderliche Bremswirkung erzielt wird.

Von Bedeutung ist in diesem Zusammenhang noch, daß das Fußpedal 116 in der Bremsstellung, also in der Kontaktstellung zwischen Bremsfläche 8 und Bremsgegenfläche 9 von einem Exzenter gehalten wird, der sich zwischen dem Bremsklotz 32 und einer ortsfesten Exzentergegenfläche einzwängt.

Es kommt daher wesentlich darauf an, daß der Exzenter, welcher für die Übertragung der Anpreßkräfte vom ortsfesten Rahmen auf den Bremsklotz 32 sorgt, einerseits um eine Drehachse drehbar ist, während zugleich in seinem Umfangsweg eine konvergent zu seinem Umfangsweg liegende Exzentergegenfläche verläuft, welcher die auflaufenden Stellen des Exzenters praktisch nicht ausweichen können.

Erst hierdurch wird nämlich dem Bremsklotz 32 die notwendige Schwenkbewegung aufgezwungen, weil nämlich der Exzenter zugleich formschlüssig an der Achswelle des Fußpedals sitzt, die sich ihrerseits an dem Bremsklotz 32 abstützt.

Es ist daher wesentlich, daß an dem Bremsklotz 32 - von der Bremsklotzachse 38 zur Bremsfläche 8 gesehen - eine Achswelle 117 gelagert ist, welche einerseits die Hebelachse für den Fußhebel 116 bildet und um welche andererseits der Exzenter synchron mit dem Fußhebel 116 gedreht werden kann.

Mit der Achswelle 117 ist daher sowohl ein nach außen ragendes Fußpedal 116 als auch der Exzenter verbunden, beide jeweils für sich drehfest, um die Drehbewegung des Fußhebels 116 auf den Bremsklotz 12 zu übertragen.

Zu diesem Zweck ist der Bremsklotz 32 ein endseitig an der Laufrollengabel 102 schwenkbar gelagerter voluminöser Körper, der von einer Querbohrung durchsetzt ist, in welchem die Achswelle 117 steckt. Auf diese Weise bildet die Achswelle 117 die Hebelachse für das Fußpedal 116 einerseits als auch für den Exzenter andererseits.

In den gezeigten Ausführungsbeispielen wird der Exzenter gebildet von einem quer zur Achswelle 117 liegenden Einschraubstift 122, der in eine quer in die Achswelle 117 eingebrachte Gewindebohrung eingeschraubt ist.

Dabei überragt der Einschraubstift 122 die Achswelle 117 beidseitig. Mit seinem Kopf 123 fährt der Einschraubstift 122 auf der Exzentergegenfläche ab, während das andere Ende freibeweglich ist. Am anderen Ende ist jedoch zusätzlich ein Innensechskant 125 vorgesehen, mit dessen Hilfe die Einschraubtiefe des Einschraubstifts 122 eingestellt werden kann.

Die Exzentergegenfläche wird in den gezeigten Ausführungsbeispielen gebildet von der Unterseite der Einrastfeder 110, die zwischen dem unteren Lagertopf 103 und dem Bremsklotz 32 auf geeignete Weise festgelegt ist.

Da die Auflauffläche des Einschraubstifts 122 zwischen den endseitigen Festlegungsstellen der Einrastfeder 110 liegt, ist zudem gewährleistet, daß die Einrastfeder 110 in gewisser Weise dem auflaufenden Nokken elastisch ausweichen kann. Auf diese Weise wird ein weicher Gang der Umfangsbremse erzielt. Die Getriebekette: Fußpedal, Exzenter, Exzentergegenfläche, Achswelle laufen praktisch verschleißfrei.

Durch die getrennte Ausbildung von Fußpedal 116 und Einschraubstift 122 ist in den vorliegenden Fällen der Exzenter gebildet durch den Einschraubstift 122 separat vom Fußpedal 116. Beide Bauteile sind jedoch jeweils drehfest mit der Achswelle 117 verbunden.

Andererseits kann es ohne weiteres auch Sinn machen, den Exzenter unmittelbar starr mit dem Fußpedal 116 auszuführen.

Durch die Verwendung einer Innensechskantschraube ist die Einschraubtiefe des Einschraubstifts 122 im Hinblick auf die Auflaufstelle an der Exzentergegenfläche einstellbar. Dabei ist die Schraubenlänge so zu bemessen, daß das Antriebsende des Einschraubstiftes 122 stets frei an der Umfangsfläche der Laufrolle vorbeigeht.

Im Hinblick auf die notwendige Totpunktstellung des Pedalwerks bieten die gezeigten Ausführungsformen Vorteile.

Die Totpunktstellung ist dann gegeben, wenn der Einschraubstift 122 in der vertikalen Stellung steht. Dann fällt seine Längsmittellinie mit der Senkrechten 124 zusammen. In dieser Stellung ist der Abstand zwischen dem Kopf des Einschraubstiftes 122 und der Nokkengegenfläche am geringsten. Überschreitet der Einschraubstift 122 die Vertikale 124, nimmt der Abstand zwischen der geometrischen Drehachse der Achswelle 117 und der Exzentergegenfläche wieder zu. Der Totpunkt des Pedalwerks ist überschritten.

Es ist daher sicherzustellen, daß das Fußpedal 116 einerseits in einer Losstellung 120 und andererseits in einer Bremsstellung 121 steht.

Dies wird dadurch erreicht, daß zwischen dem Kopf des Einschraubstiftes 122 und der Exzentergegenfläche stets ein Formschlußkontakt besteht, der jeweils in Richtung zur Vertikalen 124 zunehmende Anpreßkräfte hervorruft.

In der Losstellung 120 liegt der Pedalhebel 116 zusätzlich an einem Ruheanschlag 126 an. Andererseits steht der Kopf des Einschraubstiftes 122 noch unter der Vorspannkraft der Einrastfeder 110. Auf diese Weise wird der Hebel des Fußpedals 116 in definierter Losstellung gehalten.

Für die Bremsstellung dient der Ruheanschlag 127, gegen welchen der Einschraubstift 122 dann anliegt, wenn er die durch die Vertikale 124 definierte Totpunktstellung überschritten hat.

Den gezeigten Ausführungsbeispielen ist gemeinsam, daß der Einschraubstift 22 in einer Querbohrung 119 sitzt, welche die Achswelle 117 durchstößt und mit einem entsprechenden selbsthemmend ausgestattetem Gewinde ausgebildet ist.

Zusätzlich ist beiden Ausführungsbeispielen gemeinsam, daß die Exzentergegenfläche gegenüber dem auflaufenden Exzenter elastisch ausweichend abgefedert ist. Zu diesem Zweck ist die Einrastfeder 110 zwischen ihren beiden endseitigen Auflagerstellen von dem Exzenter beaufschlagt. Dort bildet sie die Exzentergegenfläche. Da sie lediglich mit einem Ende festgelegt ist, kann sie unter Durchbiegung mit ihrem anderen Ende eine gewisse Längsbewegung auch dann noch vollziehen, wenn sie mit ihren Rastvorsprüngen 111 mit dem oberen Lagertopf 104 im Eingriff ist.

Es ist daher wesentlich für die gezeigten Ausführungsbeispiele, daß die Exzentergegenfläche zwischen den endseitigen Festlegungsstellen einer Federzunge vorgesehen ist, die an der ersten Festlegungsstelle ortsfest mit der Laufrollengabel 102 verbunden ist und die an der zweiten Festlegungsstelle auf einem Widerlager 111 liegt und dort bei Durchbiegung infolge des ablaufenden Exzenter eine längsgerichtete Ausgleichbewegung ausführt.

Um darüber hinaus den Bremsklotz 32 auch in seiner Losstellung in definierter Position zu halten, ist der Bremsklotz einseitig an seiner Schwenkachse 38 gelagert. Die Schwenkachse 38 sitzt an der Laufrollengabel. Zwischen dem Bremsklotz 32 und der Laufrollengabel sitzt die Einrastfeder 110 derart vorgespannt, daß die Federzunge 110 zusätzlich eine Rückstellfeder für den Bremsklotz bildet. Die Federzunge 110 greift nämlich zu diesem Zweck an der Oberseite des Bremsklotzes 32 jenseits der Bremsklotzachse 38 an. Hierunter ist dasjenige Ende des Bremsklotzes 32 zu verstehen, welches von der Bremsklotzachse 38 aus gesehen entgegengesetzt zur Bremsfläche 8 verläuft.

Hierzu zeigen die Figuren eine vorgeformte Einrastfeder 110, die sich mit ihrer Oberseite an einem Ringabsatz des feststehenden Rastenkranzes 106 abstützt und die mit ihrem anderen Ende dann wieder in Richtung zur Oberseite des Bremsklotzes 32 zurückgebogen ist und dort aufliegt, während zugleich dieses Ende weitergeführt wird und dann mit einem Schenkel am unteren Lagertopf 103 angreift.

Es entsteht auf diese Weise eine tellerfederartige Abstützung des Bremsklotzes 32, der infolge der Hebelgesetze stets in Abhebestellung von der Laufrolle 1 ist, sofern er nicht durch Beaufschlagung des Fußpedals 116 in seine Bremsstellung gezwängt wird.

Zusätzlich zeigen die Figuren, daß die Laufrollengabel 102 um die vertikale Lenkachse 107 lenkbar am Befestigungsflansch 104 gelagert ist. Die Federzunge 110 weist an ihrem freien Ende eine Vielzahl von Rastvorsprüngen 111 auf, welche eine radiale Verzahnung bilden. Das freie Ende der Federzunge 110 wird im Falle der Beaufschlagung durch den Nocken zum zweiten Festlegungsende der Einrastfeder 110. In dieser Bremsstellung greifen die Rastvorsprünge 111 in eine radiale Gegenverzahnung 133 ein, welche drehstarr mit dem Befestigungsflansch 104 verbunden ist.

Die Gegenverzahnung 133 entspricht hinsichtlich Größe und Teilung der Verzahnung der Rastvorsprünge 11 und ist ebenfalls radial ausgerichtet.

Zusätzlich zeigen die Fig.7 und 8 einen weiteren Vorteil der Erfindung.

Durch die kompakte Bauform wird es nämlich möglich, das Fußpedal 116 sowohl auf der Vorlaufseite als auch auf der Nachlaufseite der Laufrolle 1 anzuordnen. Dies bietet insbesondere Vorteile bei der Zugänglichkeit des Fußpedals 116 im Hinblick auf die Verwendung bei Lenkrollen. Deshalb kann die Erfindung auch an verfahrbaren Gegenständen angewendet werden, bei denen Festrollen mit Lenkrollen kombiniert sind.

Die Verbringung des Fußpedals 116 von der Losstellung in die Bremsstellung erfolgt durch den Fuß.

Dabei ist der Lösehebel 128 von Bedeutung, welcher sich der Lauffläche der Laufrolle bis zum Kontakt in der Bremsstellung annähert.

Will man das Fußpedal 116 wieder in die Losstellung verbringen, muß die oben liegende und in der Bremsstellung hervortretende Trittfläche 129 des Lösehebels 128 beaufschlagt werden. Der Lösehebel 128 überträgt die Trittkräfte über seine am Laufrollenumfang liegende Abstützfläche 130 auf seine Drehachse 131, mit welcher er am Fußhebel 116 gelagert ist. Auf diese Weise hebt sich der Fußhebel 116 aus der Bremsstellung 121 in die Losstellung 120 und die Laufrolle ist wieder frei fahrbar.

Der Bremsklotz 32 ist U-förmig. Die lichte Weite des U ist so gewählt, daß herkömmliche Laufräder von dem quer liegenden Schenkel des U an ihrem Umfang mit dem Bremsklotz beaufschlagbar sind, der entsprechenden Bewegungsfreiraum hat.

Bezugszeichenliste:

| 1 | Laufrolle |
|---|---|
| 2 | Achslinie |
| 3 | Aufhängung |
| 4 | Lauffläche |
| 5 | Umfangsbremse |
| 6 | Richtung quer zur Drehachse |
| 7 | Drehachse |
| 8 | Bremsfläche |
| 9 | Bremsgegenfläche |
| 10 | Kontur der Bremsgegenfläche |
| 11 | axiale Richtung |
| 12 | Umfangsrichtung |
| 13 | erste Einhüllende |
| 14 | Ringsegment |
| 15 | zweite Einhüllende |
| 16 | Ringausnehmung |
| 17 | Ringausnehmung |
| 18 | radiale Richtung |
| 19 | Stirnseite der Laufrolle |
| 20 | Laufrollenbelag |
| 21 | Drehscheibe |
| 22 | Achsausnehmung |
| 23 | Befestigungsschraube |
| 24 | Drehrichtung der Laufrolle |
| 25 | Zwickel |
| 26 | Hebel |
| 27 | Krümmungsradius des Hebels |
| 28 | Radius der ersten Einhüllenden |
| 29 | Druckvorrichtung |
| 30 | Stirnseite der Laufrolle |
| 31 | Stegsegment |
| 32 | Bremsklotz |
| 33 | Rückstellfeder |
| 34 | Druckbolzen |
| 35 | Exzenter |
| 36 | Mehrkantloch |
| 37 | Hebelaufhängung |

| 38 | Hebelachse |
| 39 | Lager |
| 40 | Schwenklagertopf |
| 41 | Schwenklager |
| 42 | Anschlag für die Freistellung |
| 43 | Anschlag für die Bremsstellung |
| 44 | Mittelstufe |
| 45 | Randstufe |
| 46 | Bogenausnehmung |
| 47 | Keilausnehmung |
| 48 | Drehlager |
| 49 | Federblech |
| 50 | Widerlager |
| 51 | Ausnehmung |
| 52 | Ausnehmung |
| 53 | Drehrichtung der Laufrolle |
| 54 | Zwickel |
| 102 | Laufrollengabel |
| 103 | unterer Lagertopf |
| 104 | oberer Lagertopf |
| 106 | feststehender Rastenkranz |
| 107 | Lenkachse |
| 108 | Schmutzabweisungsring |
| 109 | Hilfslagerung |
| 110 | Einrastfeder |
| 111 | Rastvorsprung |
| 116 | Fußpedal |
| 117 | Achswelle |
| 119 | Querbohrung |
| 120 | Losstellung |
| 121 | Bremsstellung |
| 122 | Einschraubstift |
| 123 | Kopf des Einschraubstiftes |
| 124 | Senkrechte |
| 125 | Innensechskant |
| 126 | Ruheanschlag, Losstellung |
| 127 | Ruheanschlag, Fest-Stellung |
| 128 | Lösehebel |
| 129 | Trittfläche |
| 130 | Abstützfläche |
| 131 | Drehachse |
| 133 | Gegenverzahnung |

**Patentansprüche**

1. Laufrolle (1) mit Umfangsbremse (5), die zumindest mit einer Komponente in Richtung (6) quer zur Drehachse (7) der Laufrolle (1) in Bremsstellung verbracht wird, und die in der Bremsstellung mit einer Bremsfläche (8) an eine drehfest mit der Laufrolle (1) verbundene Bremsgegenfläche (9) angepreßt wird, die sich zumindest teilweise mit einer zur Bremsfläche (8) der Umfangsbremse (5) korrespondierenden Kontur (10) in axialer Richtung (11) und in Umfangsrichtung (12) der Laufrolle (1) erstreckt, wobei die Bremsgegenfläche (9) von einer konzentrisch zur Laufrolle (1) angeordneten und im Vergleich zur Laufrolle durchmesserkleineren ersten Einhüllenden (13) begrenzt wird und daß die Bremsfläche (8) von zumindest einem Ringsegment (14) gebildet wird, welches von einer weiteren, sich entlang der ersten Einhüllenden (13) erstreckenden, zweiten Einhüllenden (15) begrenzt wird, und wobei Bremsfläche (8) und Bremsgegenfläche (9) derart ausgebildet sind, daß die Bremskraft durch das Produkt aus der infolge des Flächenkontaktes zwischen Bremsfläche und Bremsgegenfläche wirkenden Normalkraft ($F_N$) und dem Haftreibungskoeffizienten ($\mu$) bestimmt wird.

2. Laufrolle nach Anspruch 1, **dadurch gekennzeichnet, daß** die Bremsgegenfläche (9) von zumindest einer Ringausnehmung (16,17) der Laufrolle (1) gebildet wird.

3. Laufrolle nach Anspruch 2, **dadurch gekennzeichnet, daß** die Ringausnehmung (16,17) eine stirnseitige (19) Durchmesserstufe der Laufrolle (1) ist.

4. Laufrolle nach Anspruch 3, **dadurch gekennzeichnet, daß** die Durchmesserstufe aus dem Material des Laufrollenbelags (20) herausgearbeitet ist.

5. Laufrolle nach Anspruch 3, **dadurch gekennzeichnet, daß** die Durchmesserstufe von einer stirnseitig (19) aufgebrachten und drehfest mit der Laufrolle (1) verbundenen Drehscheibe (21) gebildet wird.

6. Laufrolle nach Anspruch 5, **dadurch gekennzeichnet, daß** das Material der Drehscheibe (21) unter Druck gummielastisch ist.

7. Laufrolle nach einem der Ansprüche 3 bis 6, **dadurch gekennzeichnet, daß** die Bremsgegenfläche (9) der Durchmesserstufe sich ausschließlich in axialer Richtung (11) erstreckt.

8. Laufrolle nach einem der Ansprüche 1 bis 7, **dadurch gekennzeichnet, daß** die Bremsgegenfläche (9) von einem Material gebildet wird, das druckhärter als das Material des Laufrollenbelags (20) ist.

9. Laufrolle nach einem der Ansprüche 2 bis 8, **dadurch gekennzeichnet, daß** die Ringausnehmung (16,17) in radialer Richtung (18) von außen eingebracht ist.

10. Laufrolle nach einem der Ansprüche 1 bis 9, **dadurch gekennzeichnet, daß** in Drehrichtung (24) der Laufrolle (1) gesehen bei Annäherung an die Bremsfläche (8) bis zum Flächenkontakt zwischen Bremsfläche (8) und Bremsgegenfläche (9) die Einhüllenden (13,15) von Bremsfläche (8) und Bremsgegenfläche (9) einen keilförmigen Zwickel (25) zwischen sich aufspannen.

11. Laufrolle nach Anspruch 10, **dadurch gekennzeichnet, daß** die Umfangsbremse (5) von einem konkav gekrümmten Hebel (26) gebildet wird, dessen Krümmungsradius (27) zumindest geringfügig größer als der Radius der ersten Einhüllenden (13) ist und mittels Druckvorrichtung (29) radial von außen auf die Laufrolle (1) gedrückt wird.

12. Laufrolle nach einem der Ansprüche 3 bis 11, **dadurch gekennzeichnet, daß** an beiden Stirnseiten (19,30) der Laufrolle (1) jeweils eine Durchmesserstufe vorgesehen ist.

13. Laufrolle nach Anspruch 12, **dadurch gekennzeichnet, daß** zumindest ein axial (11) randseitiges Stegsegment (31) eines Bremsklotzes (32) die Bremsfläche (8) bildet.

14. Laufrolle (1), nach einem der Ansprüche 1 bis 13, **dadurch gekennzeichnet, daß** sie drehbar gelagert ist in einer Laufrollengabel (102) mit Befestigungsflansch (104) zur ortsfesten Anbringung, wobei an der Laufrollengabel (102) ein Bremsklotz (32), der die Bremsfläche (8) als Bestandteil enthält, parallel zur Drehachse (7) der Laufrolle (1) schwenkbar (38) befestigt ist und der mittels eines an ihm abgestützten Fußpedals (116) durch Verschwenken in eine Bremsstellung (121) verbracht wird, in welcher der Bremsklotz (32) mit seiner dem Laufrollenumfang zugewandten Bremsfläche (8) an die sich in Umfangsrichtung erstreckende Bremsgegenfläche (9) der Laufrolle (1) angepreßt wird und wobei in der Bremsstellung (121) das Fußpedal (116) von einem Exzenter gehalten wird, der sich zwischen dem Bremsklotz und einer ortsfesten Exzentergegenfläche einzwängt und wobei an dem Bremsklotz (32) - von der Bremsklotzachse (38) zur Bremsfläche (8) gesehen - eine Achswelle (117) gelagert ist, und wobei mit der Achswelle (117) ein vom Bremsklotz (32) nach aussen ragendes Fußpedal (116) drehfest verbunden ist, sowie der Exzenter.

15. Laufrolle nach Anspruch 14, **dadurch gekennzeichnet, daß** der Bremsklotz (32) ein endseitig schwenkbar gelagerter voluminöser Körper ist, mit einer Querbohrung, in welcher die Achswelle (117) sitzt.

16. Laufrolle nach Anspruch 14 oder 15, **dadurch gekennzeichnet, daß** der Exzenter starr an dem Fußpedal (116) sitzt und über das Fußpedal (116) mit der Achswelle (117) verbunden ist.

17. Laufrolle nach Anspruch 14 oder 15, **dadurch gekennzeichnet, daß** der Exzenter ein vom Fußpedal (116) separates Bauteil ist und drehfest an der Achswelle (117) angebracht sitzt.

18. Laufrolle nach Anspruch 17, **dadurch gekennzeichnet, daß** der Exzenter ein quer zur Achswelle (117) liegender Einschraubstift (122) ist, der in eine quer in die Achswelle (117) eingebrachte Gewindebohrung (119) eingeschraubt ist, vorzugsweise so, daß der Einschraubstift (122) die Achswelle (117) beidseitig überragt.

19. Laufrolle nach Anspruch 18, **dadurch gekennzeichnet, daß** die Einschraubtiefe des Einschraubstifts (122) im Hinblick auf die Auflaufstelle an der Exzentergegenfläche einstellbar ist.

20. Laufrolle nach einem der Ansprüche 14 bis 19, **dadurch gekennzeichnet, daß** die Exzentergegenfläche gegenüber dem auflaufenden Exzenter elastisch ausweichend abgefedert ist.

21. Laufrolle nach Anspruch 20, **dadurch gekennzeichnet, daß** die Exzentergegenfläche zwischen den endseitigen Festlegungsstellen einer Federzunge vorgesehen ist, wobei die Federzunge an ihrer ersten Festlegungsstelle ortsfest mit der Laufrollengabel (102) verbunden ist und an der zweiten Festlegungsstelle auf einem Widerlager (106) liegt und dort bei Durchbiegung eine längsgerichtete Ausgleichbewegung ausführt.

22. Laufrolle nach Anspruch 21, **dadurch gekennzeichnet, daß** der Bremsklotz (32) an einer Schwenkachse (38) gelagert ist, welche an der Laufrollengabel (102) sitzt und daß sich Federzunge (110) und Bremsklotz (32) von der Schwenkachse (38) aus umfangsmäßig ein Stück um die Laufrolle (1) herum erstrecken, wobei die Federzunge (110) zwischen der Oberseite des Bremsklotzes (32) und einem Gegenlager der Laufrollengabel (102) liegt und zusätzlich eine Rückstellfeder für den Bremsklotz (32) in die Losstellung bildet.

23. Laufrolle nach Anspruch 21 oder 22, **dadurch gekennzeichnet, daß** die Laufrollengabel (102) um eine vertikale Lenkachse (107) lenkbar am Befestigungsflansch (104) gelagert ist und daß die Federzunge (110) an ihrem zweiten Festlegungsende eine zur Lenkachse (107) radiale Verzahnung (111) trägt, welche in Bremsstellung (121) in eine radiale Gegenverzahnung (133) eingreift, welche einerseits das längsverschiebliche Widerlager bildet und welches andererseits drehstarr mit dem Befestigungsflansch (104) verbunden ist.

24. Laufrolle nach einem der Ansprüche 1 bis 23, **dadurch gekennzeichnet, daß** die Bremsfläche (8) mittels einer Rückstellfeder (33) in Abhebestellung gehalten wird.

## Claims

1. Swivelling roller (1) having a peripheral brake (5) which is brought into the braking position at least by means of a component in a direction (6) transverse to the rotational axis (7) of the swivelling roller (1) and which is pressed against a brake counter surface (9) in the braking position by means of a brake surface (8), which brake counter surface (9) is connected to the swivelling roller (1) in a rotationally fixed manner and extends with a contour (10) corresponding to the brake surface (8) of the peripheral brake (5) at least partly in the axial direction (11) and in the peripheral direction (12) of the swivelling roller (1), wherein the brake counter surface (9) is defined by a first encasing member (13) which is disposed concentric to the swivelling roller (1) and has a smaller diameter in relation to the swivelling roller and that the brake surface (8) is formed by at least one annular segment (14) which is defined by a second encasing member (15) which extends along the first encasing member (13) and wherein the brake surface (8) and the brake counter surface (9) are formed in such a manner that the braking force is determined by the product of the normal force ($F_N$), which occurs owing to the surface contact between the brake surface and the brake counter surface, and the co-efficient of static friction ($\mu$).

2. Swivelling roller as claimed in Claim 1, **characterised in that** the brake counter surface (9) is formed from at least one annular cut-out (16, 17) of the swivelling roller (1).

3. Swivelling roller as claimed in Claim 2, **characterised in that** the annular cut-out (16, 17) is an end-side (19) diameter step of the swivelling roller (1).

4. Swivelling roller as claimed in Claim 3, **characterised in that** the diameter step is worked from the material of the swivelling roller lining (20).

5. Swivelling roller as claimed in Claim 3, **characterised in that** the diameter step is formed by a rotatable disk (21) which is connected to the swivelling roller (1) in a rotationally fixed manner and which is applied from an end side (19).

6. Swivelling roller as claimed in Claim 5, **characterised in that** the material of the rotatable disk (21) is rubber elastic under pressure.

7. Swivelling roller as claimed in any one of Claims 3 to 6, **characterised in that** the brake counter surface (9) of the diameter step only extends in the axial direction (11).

8. Swivelling roller as claimed in any one of Claims 1 to 7, **characterised in that** the brake counter surface (9) is formed from a material which has more indentation hardness than the material of the swivelling roller lining (20).

9. Swivelling roller as claimed in any one of Claims 2 to 8, **characterised in that** the annular cut-out (16, 17) is inserted from the exterior in the radial direction (18).

10. Swivelling roller as claimed in any one of Claims 1 to 9, **characterised in that** in the direction of rotation (24) of the swivelling roller (1) seen during the approach to the brake surface (8) up to surface contact between the brake surface (8) and the brake counter surface (9), a wedge shaped let-in piece (25) is clamped between the encasing members (13, 15) of the brake surface (8) and the brake counter surface (9).

11. Swivelling roller as claimed in Claim 10, **characterised in that** the peripheral brake (5) is formed by a concave curved lever (26), the radius of curvature (27) of which is at least slightly larger than the radius of the first encasing member (13) and is pressed radially from the exterior onto the swivelling roller (1) by means of a compressing apparatus (29).

12. Swivelling roller as claimed in any one of Claims 3 to 11, **characterised in that** a diameter step is provided on each of the two end sides (19, 30) of the swivelling roller (1).

13. Swivelling roller as claimed in Claim 12, **characterised in that** at least one axial (11) edge-side flange segment (31) of a brake block (32) forms the brake surface (8).

14. Swivelling roller (1) as claimed in any one of Claims 1 to 13, **characterised in that** it is rotatably mounted in a swivelling roller bracket (102) having an attachment flange (104) for the purpose of being fixedly attached, wherein a brake block (32), which contains the brake surface (8) as component part, is fixed in such a manner as to be able to pivot (38) on the swivelling roller bracket (102) in parallel with the rotational axis (7) of the swivelling roller (1) and is brought into the brake position (121) by means of a pivoting motion by means of a foot pedal (116) supported thereon, in which position the brake block (32) is pressed against the brake counter surface (9) of the swivelling roller (1) by means of the brake surface (8) of the said brake block facing towards the swivelling roller periphery, which brake counter surface extends in the peripheral direction and wherein in the brake position (121) the foot pedal (116) is held by a cam which is wedged between the brake block and a fixed cam counter surface and wherein an axle shaft (117) is mounted on the brake block (32) - as seen from the brake block axis (38) to the brake surface (8) - and wherein a foot pedal (116) which projects outwardly from the brake block (32) is connected in a rotationally fixed manner by means of the axle shaft (117), as well as the cam.

15. Swivelling roller as claimed in Claim 14, **characterised in that** the brake block (32) is a bulky body pivotably mounted on the end side and having a transverse bore in which the axle shaft (117) is located.

16. Swivelling roller as claimed in Claim 14 or 15, **characterised in that** the cam is rigidly located on the foot pedal (116) and is connected over the foot pedal (116) by means of the axle shaft (117).

17. Swivelling roller as claimed in Claim 14 or 15, **characterised in that** the cam is a separate component to the foot pedal (116) and is located mounted on the axle shaft (117) in a rotationally fixed manner.

18. Swivelling roller as claimed in Claim 17, **characterised in that** the cam is a screw-in pin (122) which lies transverse to the axle shaft (117) and which is screwed into a tapped hole (119), which is provided transversely in the axle shaft (117), in such a manner so that preferably the screw-in pin (122) extends beyond the axle shaft (117) on both sides.

19. Swivelling roller as claimed in Claim 18, **characterised in that** the screw-in depth of the screw-in pin (122) is adjustable with regard to the contact position on the cam counter surface.

20. Swivelling roller as claimed in any one of Claims 14 to 19, **characterised in that** the cam counter surface is spring-mounted so as to deflect in an elastic manner with regard to the contacting cam.

21. Swivelling roller as claimed in Claim 20, **characterised in that** the cam counter surface is provided between the end-side fixing positions of a resilient tongue, wherein the resilient tongue is fixedly connected at its first fixing position to the swivelling roller bracket (102) and at its second fixing position lies on an abutment (106) and at this location effects a longitudinal compensating movement by means of a deformation.

22. Swivelling roller as claimed in Claim 21, **characterised in that** the brake block (32) is mounted on a swivel axis (38) which is located on the swivelling roller bracket (102) and **in that** the resilient tongue (110) and the brake block (32) extend from the swivel axis (38) with respect to the periphery a little way around the swivelling roller (1), wherein the resilient tongue (110) is located between the upper side of the brake block (32) and a counter-bearing of the swivelling roller bracket (102) and additionally forms a restoring spring for the brake block (32) in the release position.

23. Swivelling roller as claimed in Claim 21 or 22, **characterised in that** the swivelling roller bracket (102) is mounted on the attachment flange (104) so as to be controlled about a vertical steering axle (107) and **in that** the resilient tongue (110) bears a gearing (111) on its second fixing end, which gearing is radial to the steering axle (107) and engages into a radial counter-gearing (133) in the braking position (121), which counter-gearing on the one hand forms the longitudinally displaced abutment and on the other hand is connected to the attachment flange (104) in a non-rotational manner.

24. Swivelling roller as claimed in any one of Claims 1 to 23, **characterised in that** the brake surface (8) is supported by means of a restoring spring (33) in the raised position.

### Revendications

1. Galet de roulement (1) avec un frein périphérique (5) qui est amené en position de freinage au moins avec une composante dans le sens (6) perpendiculaire à l'axe de rotation (7) du galet (1) et qui, en position de freinage, est pressé avec une surface de freinage (8) contre une surface de freinage opposée (9) qui est reliée, fixe en rotation, au galet (1) et qui s'étend au moins en partie, avec un contour (10) correspondant à la surface de freinage (8) du frein périphérique (5), dans le sens axial (11) et dans le sens périphérique (12) du galet (1), étant précisé que la surface de freinage opposée (9) est délimitée par une première courbe enveloppante (13) concentrique par rapport au galet (1) et de plus petit diamètre que celui-ci, que la surface de freinage (8) est formée par au moins un segment annulaire (14) lui-même délimité par une seconde courbe enveloppante (15) qui s'étend le long de la première courbe enveloppante (13), et que la surface de freinage (8) et la surface de freinage opposée (9) sont conçues pour que la force de freinage soit définie par le produit de la force normale ($F_N$) agissant du fait du contact superficiel entre la surface de freinage et la surface de freinage opposée, et du coefficient d'adhérence ($\mu$).

2. Galet de roulement selon la revendication 1, **caractérisé en ce que** la surface de freinage opposée (9) est définie par au moins un creux annulaire (16, 17) du galet (1).

3. Galet de roulement selon la revendication 2, **caractérisé en ce que** le creux annulaire (16, 17) est constitué par une différence de diamètre prévue sur le côté frontal (19) du galet (1).

4. Galet de roulement selon la revendication 3, **caractérisé en ce que** la différence de diamètre est réalisée grâce à un usinage de la matière du revêtement de galet (20).

5. Galet de roulement selon la revendication 3, **caractérisé en ce que** la différence de diamètre est définie par un disque rotatif (21) qui est appliqué sur le côté frontal (19) et qui est relié, fixe en rotation, au galet (1).

6. Galet de roulement selon la revendication 5, **caractérisé en ce que** la matière du disque rotatif (21), sous pression, est élastique comme du caoutchouc.

7. Galet de roulement selon l'une des revendications 3 à 6, **caractérisé en ce que** la surface de freinage opposée (9) avec le diamètre différent s'étend uniquement dans le sens axial (11).

8. Galet de roulement selon l'une des revendications 1 à 7, **caractérisé en ce que** la surface de freinage opposée (9) est formée par une matière qui est plus dure, à la pression, que la matière du revêtement de galet (20).

9. Galet de roulement selon l'une des revendications 2 à 8, **caractérisé en ce que** le creux annulaire (16, 17) est réalisé de l'extérieur, dans le sens radial (18).

10. Galet de roulement selon l'une des revendications 1 à 9, **caractérisé en ce que** dans le sens de rotation (24) du galet (1), quand celui-ci se rapproche de la surface de freinage (8) jusqu'au contact superficiel entre ladite surface de freinage (8) et la surface de freinage opposée (9), les courbes enveloppantes (13, 15) des surfaces (8) et (9) définissent entre elles un espace en forme de coin (25).

11. Galet de roulement selon la revendication 10, **caractérisé en ce que** le frein périphérique (5) est formé par un levier concave (26) dont le rayon de courbure (27) est au moins légèrement supérieur au rayon de la première courbe enveloppante (13), et est pressé sur le galet (1) radialement de l'extérieur, à l'aide d'un dispositif de pression (29).

12. Galet de roulement selon l'une des revendications 3 à 11, **caractérisé en ce qu'**une différence de diamètre est prévue sur chacun des deux côtés frontaux (19, 30) du galet (1).

13. Galet de roulement selon la revendication 12, **caractérisé en ce qu'**au moins un segment de nervure (31), situé sur le bord, axialement (11), d'un sabot de frein (32) forme la surface de freinage (8).

14. Galet de roulement (1) selon l'une des revendications 1 à 13, **caractérisé en ce qu'**il est monté en rotation dans une fourche de galet de roulement (102) avec une bride de fixation (104) pour un montage fixe, étant précisé qu'il est prévu sur la fourche (102), monté pour pouvoir pivoter (38) parallèlement à l'axe de rotation (7) du galet (1), un sabot de frein (32) qui contient comme partie intégrante la surface de freinage (8) et qui est amené, grâce à un pivotement à l'aide d'une pédale (116) en appui sur lui, dans une position de freinage (121) dans laquelle ledit sabot de freinage (32) est pressé avec sa surface de freinage (8) tournée vers la périphérie du galet contre la surface de freinage opposée (9) qui s'étend dans le sens périphérique, et étant précisé que dans la position de freinage (121), la pédale (116) est maintenue par un excentrique qui se comprime entre le sabot de frein et une surface d'excentrique opposée fixe, qu'un axe (117) est monté sur le sabot de freinage (32) - si on considère le sens qui va de l'axe de sabot de frein (38) à la surface de freinage (8) - et qu'une pédale (116) qui dépasse du sabot de frein (32), vers l'extérieur, ainsi que l'excentrique sont reliés, fixes en rotation, à l'axe (117).

15. Galet de roulement selon la revendication 14, **caractérisé en ce que** le sabot de frein (32) est un corps volumineux, monté pivotant côté extrémité, avec un perçage transversal dans lequel est placé l'axe (117).

16. Galet de roulement selon la revendication 14 ou 15, **caractérisé en ce que** l'excentrique est placé de manière rigide sur la pédale (116) et est relié par celle-ci à l'axe (117).

17. Galet de roulement selon la revendication 14 ou 15, **caractérisé en ce que** l'excentrique est un élément distinct de la pédale (116) et est monté, fixe en rotation, sur l'axe (117).

18. Galet de roulement selon la revendication 17, **caractérisé en ce que** l'excentrique est une tige filetée (122) qui est perpendiculaire à l'axe (117) et qui est vissée dans un perçage fileté (119) prévu transversalement dans l'axe (117), de préférence de manière à dépasser de l'axe (117) des deux côtés.

19. Galet de roulement selon la revendication 18, **caractérisé en ce que** la profondeur de vissage de la tige filetée (122) est réglable compte tenu du point de contact sur la surface d'excentrique opposée.

**20.** Galet de roulement selon l'une des revendications 14 à 19, **caractérisé en ce que** la surface d'excentrique opposée est suspendue de manière à dévier élastiquement par rapport à l'excentrique qui vient en contact.

**21.** Galet de roulement selon la revendication 20, **caractérisé en ce que** la surface d'excentrique opposée est prévue entre les points de fixation d'extrémité d'une lame flexible, cette lame flexible étant reliée de manière fixe à la fourche de galet (102), au niveau de son premier point de fixation, et étant posée sur une butée (106), au niveau du second point de fixation, où elle décrit un mouvement de compensation longitudinal, lors d'un fléchissement.

**22.** Galet de roulement selon la revendication 21, **caractérisé en ce que** le sabot de freinage (32) est monté sur un pivot (38) qui est placé sur la fourche de galet (102), et **en ce que** la lame flexible (110) et le sabot de freinage (32), à partir de ce pivot (38), s'étendent sur une partie de la circonférence du galet (1), la lame flexible (110) se trouvant entre le côté supérieur du sabot de freinage (32) et une contre-butée de la fourche de galet (102) et formant en supplément un ressort de rappel pour ramener le sabot (32) dans sa position libre.

**23.** Galet de roulement selon la revendication 21 ou 22, **caractérisé en ce que** la fourche de galet (102) est montée sur la bride de fixation (104) de manière à pouvoir être orientée autour d'un axe de direction vertical (107), et **en ce que** la lame flexible (110) porte, à sa seconde extrémité de fixation, une denture (111) qui est radiale par rapport à l'axe de direction (107) et qui, dans la position de freinage (121), s'engrène dans une denture radiale opposée (133), laquelle forme d'un côté la butée mobile longitudinalement et est reliée de l'autre côté, rigide en rotation, à la bride de fixation (104).

**24.** Galet de roulement selon l'une des revendications 1 à 23, **caractérisé en ce que** la surface de freinage (8) est maintenue en position décollée à l'aide d'un ressort de rappel (33).

**15**

Fig. 1

Fig. 2

Fig. 3

EP 0 951 433 B1

Fig. 4

Fig. 5

Fig. 6a

b

c

d

EP 0 951 433 B1

Fig.7

Fig.7a

Fig.8a

Fig.8